# EUROPEAN PATENT APPLICATION

(11) **EP 0 707 938 A2**
(43) Date of publication of application: **24.04.1996**
(21) Application number: 95106548.1
(22) Date of filing: 02.05.1995
(51) Int. Cl.: B29C 47/04

(54) **Process for producing thermoplastic film by lateral coextrusion**

(30) Priority: 19.10.1994 JP 253789/94
(71) Applicant: Hoechst Diafoil GmbH, D-65023 Wiesbaden (DE); DIAFOIL HOECHST CO., LTD., Chiyoda-ku Tokyo (JP)
(72) Inventor: Kurz, Rainer, D-65232 Taunusstein (DE); Müller, Harald, D-65232 Taunusstein (DE); Bennett, Cynthia, D-55232 Alzey (DE); Crab, Günther, D-65232 Taunusstein (DE); Oberländer, Klaus, D-65207 Wiesbaden (DE); Sato, Yoshinori, Yamato-shi, Kanagawa-ken 242 (JP)
(74) Representative: Zounek, Nikolai, Dipl.-Ing.

(57) **Abstract**

A process for producing a thermoplastic film (10) is described comprising the steps of:
a) laterally coextruding an amorphous film onto a chill roll wherein said film has distinct edge portions (12) and a distinct central portion (14);
b) orienting the amorphous film in at least one direction, thereby producing an oriented film; and
c) trimming away the edge portions (12) of the oriented film.

## Description

The present invention relates to a method for producing thermoplastic polymer film. In particular, the present invention relates to a method of producing thermoplastic film by a lateral coextrusion process and then it is stretched at least uniaxially and preferably biaxially. The present invention is particularly useful for films made from expensive polymers such as PEN and PENBB, although the process of the present invention also has utility for films which are not so expensive such as PET.

A conventional process for producing thermoplastic polymer film consists of extruding the polymer film through a die onto a cold chill roll thus forming a substantially amorphous film. In order to make this film useful, i.e., have useful physical properties, it is necessary to orient this film in at least one direction, and preferably two directions (biaxially oriented film). Generally, the film is first oriented in the longitudinal direction, that is the direction in which the film is extruded onto the chill roll. This is typically done with two series of rollers, the second series of which rotates faster than the first series of rollers, thereby stretching the film between two and five times its original length. Thereafter, the film may be stretched in the transverse direction typically between two and five times its original width by a tenter apparatus.

Regardless whether the film is biaxially oriented or monoaxially oriented the edges of the film are always conventionally trimmed off so that only the center part of the film is the commercial product. If possible, the edge trim is recycled so that this waste, which can make up twenty percent or more of the extruded film, can be reduced. Generally, polymer films contain coatings to make the film more useable. However, some specific coatings on the film, when trimmed off and recycled, produce a yellow coloring effect to the film and can introduce unacceptable impurities. Thus, the edge trim must either be disposed of, or employed as a recycled product where color and impurities are not so important.

In both the extrusion of the polymer film onto the chill roll and in the longitudinal drawing areas, the film necks down thereby producing thick edges as compared to the central portion of the film. While the thin portion of the film cools quicker and thus remains amorphous, the thicker edge portions cool slower and are more susceptible to crystallization. Likewise, when the film is oriented in a tenter apparatus, the clamps which hold the film and stretch it, create a non-uniform profile on the edge portion of the film, and that portion of the film held by the clamp is not oriented in contrast to the center portion of the film. These variations in profile and in the percentage of crystallization caused by the differences in orientation between the edge trim and the center portion of the film can cause the film to tear during production.

Conventional processes for producing very thin films, films less than two microns in thickness, and particularly films less than one micron in thickness are particularly difficult to produce, in part, because of the variation in the thickness profile and in the crystallinity of the film from edge to edge. Obviously, the thinner the film, the easier it is for the film to tear, thus interrupting production and driving up the cost. Moreover, these very thin films are now becoming more desirable, particularly in the area of capacitor films, where capacitors are more efficient the thinner the film is.

This biaxially oriented film has many uses such as capacitor film, photographic film, reprographic film, magnetic tape substrates, decorative films, packaging films, etc. If a monoaxially oriented film is desired, then the film can be stretched either in the longitudinal direction (LD direction) or the transverse direction (TD direction) with the apparatus described above to produce a film which is generally useful in the packaging industry as a shrink film, or as an adhesive tape for example.

After the film has been oriented, it is generally heat-set by holding it under dimensional restraint at an elevated temperature, below the melt temperature of the polymer. This crystallizes the film to a sufficient degree that the physical properties are "locked-in". When shrink film is made, heat-setting is not employed, or if employed, a low temperature heat set is employed.

The process of the present invention has two distinct advantages over the prior art process which have the above-described problems. The first advantage is that the cost of production, especially for expensive polymers, is significantly reduced. The second advantage is that the runnability of the film during and after production is greatly improved.

In particular, the present invention overcomes the above-described problems in a unique and novel manner. In particular, the present invention extrudes the film onto the chill roll wherein the edges are produced with an inexpensive material compared with the central portion. This can be accomplished by using a conventional die having a single opening along with a laminating feed block, wherein the polymer melt streams are arranged to form a polymer film having a distinct central portion and distinct edge portions. This can also be accomplished by means of a die which might be described as an A-B-A die wherein the A-portion represents the edges of the film and the B-portion represents the central portion of the film as illustrated in the accompanying drawings. Both of these methods will be described later in more detail. In those situations where the edge trim can be recycled, the polymer employed in the edge trim can be the same as the polymer employed in the central portion. On the other hand, in those situations where the edge trim cannot be easily recycled or is recyclable in cheaper products, it is more desirable to employ cheaper materials which are compatible with the central polymer.

In a broader sense, the present invention concerns a process for producing thermoplastic film comprising the steps of:
a) laterally coextruding a film onto a chill roll, wherein the film has edge portions distinct from a central portion;
b) orienting the film in at least one direction; and
c) trimming off the edge portions.

Figure 1 illustrates a cross section of a polymer profile having thicker edge portions produced by a lateral coextrusion process.

Figure 2 illustrates a schematic view of a conventional extrusion system, including a pinole, for extruding film-on-film to produce a laminate.

Figure 3 illustrates a schematic view of a conventional extrusion system, except that the pinole is rotated 90° to produce a film of the present invention.

Figure 4 illustrates a fragmentary plan view of three conventional dies grouped to produce a film of the present invention by employing apparatus different than that shown in Figure 3.

With the present invention, mono- and biaxially oriented films can be produced with such polymers as polyphenylene sulfide (PPS), polyether etherketone (PEEK), polyethylene naphthalate (PEN), polyethylene naphthalate bibenzoate (PENBB), as well as such polymers as polyethylene terephthalate (PET), polyethylene terephthalate isophthalate (PETIP), as well as olefin polymers such as polyethylene (PE), polypropylene (PP), polybutylene (PB), and poly-3-methylbutene-1 (PMB), and nitriles such as poly-N-ethernitrile (PN). These polymers may be filled or unfilled as desired.

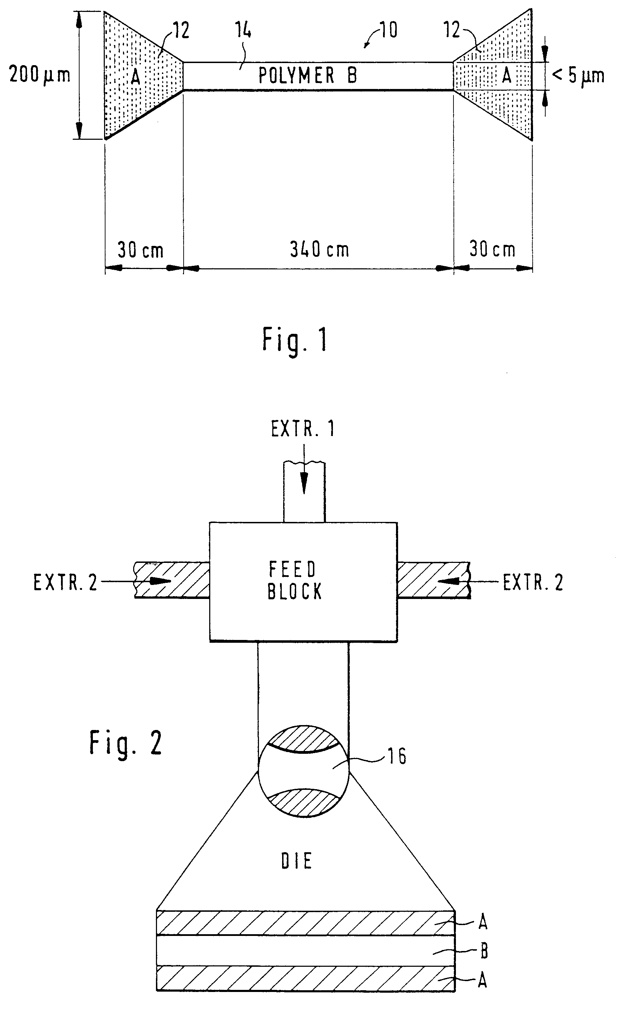

Referring to Figure 1 of the drawing, the polymer cross-section 10 has two edge portions 12 shown is triangular profile and a connecting central portion 14. However, the profile of the edge portion is not significant to the invention and, therefore, its profile could be oblong, round, square, a gradual taper, etc. It is not necessary that the edge polymer A and the central polymer B be of the same type, or the same class, such as polyesters, so long as the polymers sufficiently bond to one another to survive the general film production process. In particular what is important is that the polymers must have a similar melt viscosity and a similar draw or stretch temperature (this generally means, the glass transition temperature, T_{g}, of each polymer is close, generally within 20 °C, preferably 10 °C).

Figure 2 shows a pair of schematically illustrated conventional extruders 1 and 2 for polymers A and B. Typically, different polymer compositions are extruded through the laminating feed block to produce the laminate shown, where Polymer B is covered on both major surfaces with Polymer A. Polymer B is extruded through the central portion of the feed block from extruder 1 while Polymer A is extruded from extruder 2 through the upper and lower part of the feed block. From the feed block the polymer melts flow through the pinole 16 and are extruded through a die. This conventional extrusion system is employed to produce what is typically known as an A-B-A laminate.

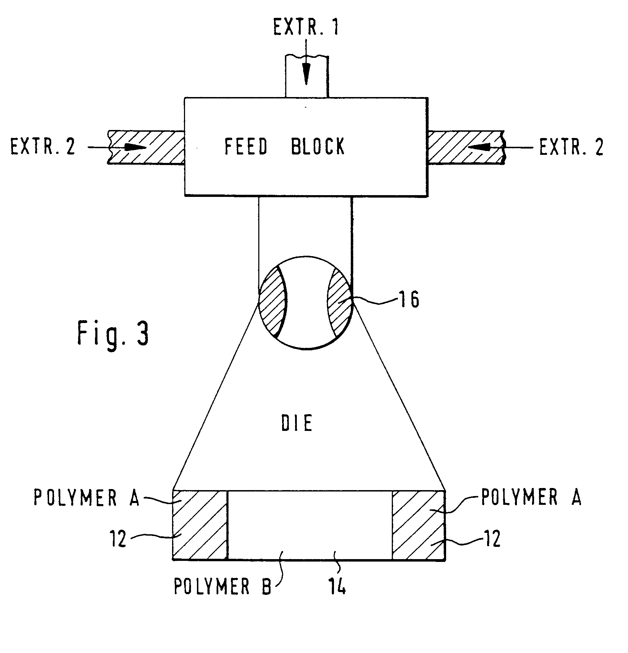

Figure 3 shows the apparatus of Figure 2, except the pinole 16 has been rotated so that the melt flows from the pinole 16 have been rotated 90°, to laterally coextrude a film in which the edge portions are formed from Polymer A and the central portion is formed from Polymer B, as illustrated. In this embodiment, the die is the same as conventionally employed in the system in Figure 2, i.e. a single opening, rectangular die slot.

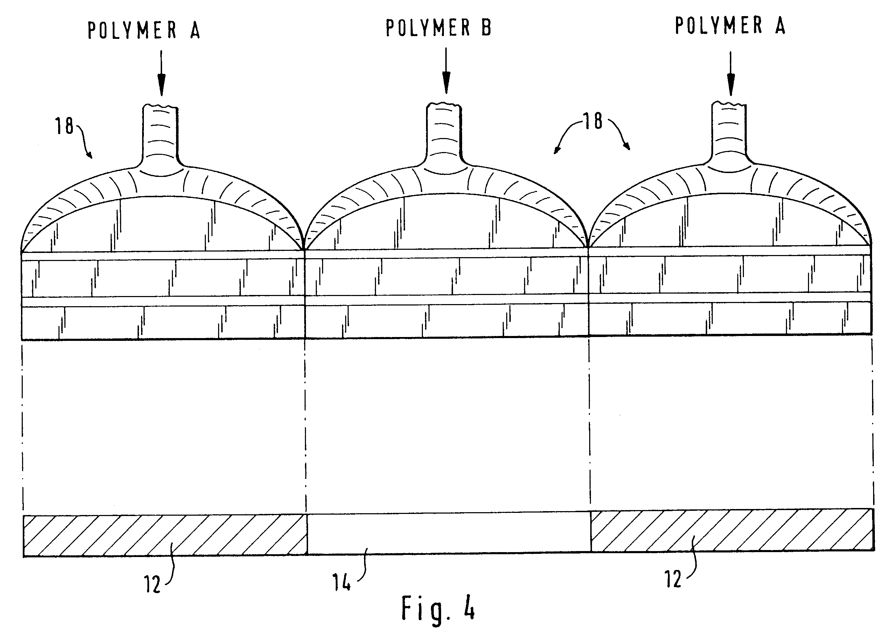

Figure 4 shows an alternate means of producing the film of the present invention. Figure 4 shows three conventional dies 8, side-by-side, wherein the two edges or end sections 12 contain the same polymer A, while polymer B extruded from the central portion 14 is different, so as to form a lateral coextruded film A-B-A. In summary, the A-B-A laterally coextruded film of the present invention can be produced by two different ways, namely:
1) employing conventional laminating apparatus having extruders, a laminating feed block, and a die, and merely rotating the melt streams 90° as shown in Figure 3; or
2) constructing three dies to extrude 2 different polymers, one for both edge portions and the other for the central section of polymer film, as shown in Figure 4.

As examples which in no way limit the present invention, when it is desired to produce a PENBB film, the edge trim material could be PEN which is significantly less expensive. This may be particularly desirable when very thin films of PENBB are desired for use as capacitor films, for example. Other examples are employing PET for magnetic applications where it is very critical that the filled film be uniform and consistent in profile as well as in the distribution of the filled particles within the film itself. In such an instance, it may be more desirable to produce the edges of such a film with virgin unfilled PET film. In this example the cost of producing a filled polymer acceptable for the magnetic film industry is more expensive than producing virgin, unfilled PET. Moreover, the edge of virgin PET could then be recycled. In other applications, it may be desirable that the central portion of the film have little or no filled particles, and that the edge trim be highly filled. In this application, it is not important if the filling in the edge trim agglomerates or is otherwise not as uniformly distributed as required for magnetic applications, for example. In this situation, the edge with inexpensive fill therein is cheaper to produce than the central polymer. Accordingly, it is clear that the central portion of the film of the present invention can be filled, or unfilled, and that the edge portions of the film can be filled or unfilled as desired. Moreover, it is equally clear that the central portion of the film can be filled with one material necessary for its end use while the edges of the film can be filled with a much cheaper material. Suitable filling can be organic particles such as hard crosslinked polymers such as acrylic polymers or copolymers, olefin polymers or copolymers, and polyester polymers or copolymers, or inorganic particles such as silica, alumina, calcium carbonate, titanium dioxide or clay, or combinations of two or more of these. Also, the central portion could be virgin polymer, while the edges contain reclaimed or recycled polymer, thus lowering the cost of producing the film. Where the central portion of the film must be filled, but also contains coatings which make the film non-recyclable, it would be desirable to use any compatible polymer which can be produced as cheap as possible for the edge material since it must be disposed of. For example, a polyester film having a vinylidene barrier coating thereon can be produced by the present invention with edge trim material of a polyester highly filled with the cheaper silica or calcium carbonate, or other cheap material such as recycled or reclaimed polymer, since the entire edge must be disposed of because vinylidene coated polyester is generally not recyclable.

It is critical, however, that the edge material be a polymer compatible with the central portion. That is, the polymers must be capable of sufficiently bonding (chemical compatibility) when laterally coextruded to survive orientation. Also, the polymers must have a similar melt viscosity (within a factor of 3, preferably 2) and a similar T_{g} (within 20 °C of each other, preferably within 10 °C).

Whether the film is stretched in one direction only (either the longitudinal direction, [LD] or the transverse direction [TD]), or the film is biaxially oriented (LD/TD or TD/LD), or supertensilised (such as LD/TD/LD or TD/LD/TD or LD/TD/TD or TD/LD/LD, or LD/TD/LD/TD, or TD/LD/TD/LD, etc.) is not important to the present invention, that is, the present process can be used for all of these various stretching processes which are well known in the art.

It is also not important if the film is coated before orientation, during orientation, or after orientation. For example, a conventional process is to orient the film in one direction, coat the film and then orient the film in the other direction. Again, the present invention is applicable to a film which is coated or uncoated.

The following example further illustrates the present invention, without limiting it.

### Example

A PET film having unfilled edges and a filled central portion was produced with conventional laminating film apparatus as illustrated in Figure 3, wherein the pinole was rotated 90°. Various film thicknesses and widths, as well as various edge profiles were produced and the amount of mass of the edge trim, in percent, as compared to the total mass, is calculated.

**Table**

| **Film Thickness** | **Film Width** | **Edge Profile** | | **Edge Trim Mass** |
|---|---|---|---|---|
| | | Width | Height | |
| 1 µ | 4 m | 30 cm | 200 µm | 95 % |
| 2 µ | 4 m | 30 cm | 200 µm | 90 % |
| 5 µ | 4 m | 30 cm | 200 µm | 78 % |
| 1 µ | 8 m | 30 cm | 200 µm | 89 % |
| 2 µ | 8 m | 30 cm | 200 µm | 80 % |
| 5 µ | 8 m | 30 cm | 200 µm | 62 % |
| 1 µ | 4 m | 30 cm | 50 µm | 81 % |
| 2 µ | 4 m | 30 cm | 50 µm | 69 % |
| 5 µ | 4 m | 30 cm | 50 µm | 47 % |
| 1 µ | 8 m | 30 cm | 50 µm | 67 % |
| 2 µ | 8 m | 30 cm | 50 µm | 50 % |
| 5 µ | 8 m | 30 cm | 50 µm | 29 % |

## Claims

1. A process for producing a thermoplastic film comprising the steps of:
a) laterally coextruding an amorphous film onto a chill roll wherein said film has distinct edge portions and a distinct central portion;
b) orienting the amorphous film in at least one direction, thereby producing an oriented film; and
c) trimming away the edge portions of the oriented film.

2. The process of claim 1, wherein the thermoplastic film includes PET, PETIP, PEN, PENBB, PEEK, PE, PP, PN.

3. The process of claim 1, wherein the film is oriented monoaxially.

4. The process of claim 1, wherein the film is oriented biaxially.

5. The process of claim 1, wherein the edge portions contain a cheaper polymer than the central portion.

6. The process of claim 5, wherein the central portion is filled polymer.

7. The process of claim 5, wherein the central portion is unfilled, virgin polymer.

8. The process of claim 5, wherein the edge portion is filled polymer.

9. The process of claim 5, wherein the edge portion is unfilled, virgin polymer.

10. The process of claim 6, wherein the edge portion is the same polymer as the central portion.

11. The process of claim 7, wherein the central portion is the same polymer as the edge portion.

12. The process of claim 8, wherein the central portion is the same polymer as the edge portion.

13. The process of claim 9, wherein the central portion is the same polymer as the edge portion.

14. The process of claim 5, wherein the central portion is PENBB, and the edge portion is PEN.

15. The process of claim 5, wherein the central portion is virgin or filled PET and the edge portion is reclaimed PET.

16. The process of claim 2, wherein the oriented film is less than two microns in thickness.

17. The process of claim 16, wherein the oriented film is less than one micron in thickness.

18. The process of claim 5, wherein the edge portion is recyclable.

19. A thermoplastic film made by the process of claim 1.

20. A thermoplastic film made by the process of claim 14.
